# EUROPÄISCHE PATENTANMELDUNG

(11) **EP 0 680 936 A1**
(43) Veröffentlichungstag der Anmeldung: **08.11.1995**
(21) Anmeldenummer: 95105992.2
(22) Anmeldetag: 21.04.1995
(51) Int. Cl.: C02F 11/12, C05F 7/00

(54) **Verfahren zum Verarbeiten von Klärschlamm**

(30) Priorität: 02.05.1994 DE 4415162; 23.08.1994 DE 4429827; 23.02.1995 DE 19506195
(71) Anmelder: Hochwald-Ton-GmbH, D-66620 Nonnweiler (DE)
(72) Erfinder: Grässer, Jürgen, D-66125 Dudweiler (DE); Sütterlin, Hansdieter, CH-5727 Oberkulm (CH)
(74) Vertreter: Sparing - Röhl - Henseler Patentanwälte

(57) **Zusammenfassung**

Die Erfindung betrifft ein Verfahren zum Verarbeiten von Klärschlamm durch Mischen eines teilentwässerten Klärschlamms mit einem Versatz. Zur Aufbereitung des Klärschlamms ist vorgesehen, daß Klärschlamm mit einem Trockengehalt von etwa 15 bis 50 % TS durch Zumischen von mindestens 250°C heißem, körnigem Material, das in bezug auf Dünge- und Rekultivierungszwecke im wesentlichen neutral oder fördernd ist, auf mindestens 70°C erhitzt und das so gebildete Gut als Dünge- und/oder Rekultivierungsmaterial verwendet wird.

## Beschreibung

Die Erfindung betrifft ein Verfahren zum Verarbeiten von Klärschlamm durch Mischen eines teilentwässerten Klärschlamms mit einem Versatz.

Verfahren zum Verarbeiten von Klärschlamm sind notwendig, um die bei der Reinigung von Abwasser anfallenden großen Klärschlammengen aus kommunalen und industriellen Kläranlagen nach einer entsprechenden Stabilisierung, insbesondere durch Ausfaulen, als Sekundärrohstoffe wiederverwerten zu können.

Zur Verwertung der Klärschlämme bietet sich deren Einsatz als Bodenverbesserungsmittel sowie als teilweiser Düngerersatz für mineralische Düngemittel an, da in der Regel eine Vielzahl organischer Substanzen sowie Makro- und Mikronährelemente in Klärschlämmen enthalten sind. Insoweit sind Klärschlämme Wertstoffe bzw. Sekundärrohstoffe, die allerdings mit einer Reihe anorganischer und organischer Schadstoffe, pathologischer Bakterien, Viren, Wurmeiern etc. behaftet sind, so daß die auszubringende Klärschlammenge pro Hektar und Jahr im allgemeinen begrenzt ist. Der Hygienisierungseffekt des Bodens ist vielfach zu schwach bzw. zu langsam. Es treten deshalb zunehmend Probleme im Zusammenhang mit dem Verbleib der Klärschlämme auf.

Aufgabe der Erfindung ist es daher, ein Verfahren zum Verarbeiten von Klärschlamm durch Mischen eines teilentwässerten Klärschlamms mit einem Versatz zu schaffen, das eine Aufbereitung des Klärschlamms zu einem in Böden austragbaren Sekundärrohstoff mit vermindertem Gefahrenpotential erlaubt. Eine weitere Aufgabe besteht darin, eine umweltfreundliche und kostengünstige Verwertung der Klärschlämme zu erreichen.

Diese Aufgabe wird gemäß dem kennzeichnenden Teil des Anspruchs 1 gelöst.

Hierdurch wird ein Verfahren zum Verarbeiten von Klärschlamm geschaffen, bei dem durch ein rein mechanisches Vermengen des Klärschlamms mit einem gewählt heißen, körnigen Material eine schnelle und sichere Hygienisierung des Klärschlamms erreicht wird. Durch die Zuführung eines heißen Versatzes ist eine direkte Erhitzung des Klärschlamms möglich. Das Gefahrenpotential des Klärschlamms wird reduziert, so daß der Klärschlamm als Nährelementespender in größeren Mengen ausbringbar ist. Der dem Klärschlamm zugemischte heiße Versatz kann zudem durch geeignete Wahl der stofflichen Zusammensetzung zur strukturellen Anpassung des Klärschlamms an verschiedene Austragformen und/oder zur Adsorption der Schwermetalle aus dem Klärschlamm genutzt werden.

Als heißes, körniges Material kann ein tonmineralhaltiger Rohstoff verwendet werden, dessen Tonmineralanteil vorzugsweise durch Brennen zumindest teilweise calciniert ist. Solche zumindest graduell calcinierte Tone, die ihr Kristallwasser zumindest teilweise verloren haben, besitzen aufgrund noch vorhandener Reaktionsoberfläche eine Schwermetalladsorptionsfähigkeit. Andererseits ist die Quellfähigkeit reduziert, was für die Ausbringung in Böden oder Rotten vorteilhaft ist.

Die heiße Zugabe eines tonmineralhaltigen Materials hat zur Folge, daß ein Anhaften der Feststoffe des Schlamms an den Tonmineralkörnern vermieden wird, was die Möglichkeit eines Separierens eröffnet. Insbesondere das organische Zellgefüge eines kommunalen Klärschlamms wird durch das heiße tonmineralhaltige Material schockartig geöffnet und nimmt eine nachhaltige Krümeligkeit (pH-Wert um 6,8 bis 7,0 garantiert diese Nachhaltigkeit) an.

Der Einsatz von zumindest teilweise calciniertem Ton als Versatz ist aus dem bereits erwähnten Grund der Nutzung von Wärme aus industriellen Vorprozessen vorteilhaft. Üblicherweise wird calcinierter Ton aus einem sogenannten Schrühbrand, das heißt einem Brand bei 500°C bis 700°C, erhalten. Dieser heiße Schrühton kann unmittelbar oder nach Durchlaufen einer Kühlstrecke dem Klärschlamm zugesetzt werden. Eine nachträgliche Erhitzung des Versatzes kann entfallen.

Die Körnung des heißen Versatzes ist wählbar, wobei die Korngrößen vorzugsweise hauptsächlich zwischen 1 µm und 10 mm liegen. Ein Feinkornanteil, insbesondere eines tonmineralhaltigen Rohstoffs, begünstigt die Oberflächenaktivität, der Grobkornanteil die Textur des Austragmaterials.

Wird schließlich der Tonmineralbestandteil mit einer wählbaren Körnung von mindestens 60% zwischen 1 und 10 mm zugesetzt, dann ist zumindest der Hauptbestandteil des Adsorptionsmittels derart gewählt, daß es eine gegenüber den Feststoffen des Klärschlamms größere Körnung und/oder anderes spezifisches Gewicht besitzt. Eine Abtrennung eines Grobkornanteils des Gesamtgutes von mindestens 1 mm führt zu einer Abtrennung von Tonmineralien mit adsorbierten Schwermetallen und gegebenenfalls adsorbierten organischen Schadstoffen. Das erfindungsgemäß erhaltene Gut besitzt dann einen wesentlich reduzierten Schadstoffgehalt.

Bei Klärschlämmen bleibt dabei das hohe Wertstoffpotential an Makro- und Mikronährelementen erhalten, so daß durch deren Rückführung in den Kreislauf der Natur dieses Wertstoffpotential einer Wiederverwertung zugeführt wird.

Bei dem als heißes, körniges Material zugemischten Versatz kann es sich auch um einen Sekundärrohstoff eines Industrieprozesses, z.B. Feuerung, Eisen- und Stahlherstellung, handeln, der in einem prozeß- oder entstehungsbedingten heißen Zustand zur Übertragung von Wärme auf den Klärschlamm genutzt werden kann. Anfallende Wärme wird auf diese Weise eingesetzt, wodurch die Aufwendung zusätzlicher Energie zur Erhitzung von Klärschlamm vermieden werden kann. Desweiteren können insbesondere feinkörnigere Sekundärrohstoffe, die bisher vielfach nur deponiert wurden, gegebenenfalls pelletiert, einer Wiederverwertung zugeführt werden.

Die Erhitzung des Klärschlamms erfolgt vorzugsweise auf solche Temperaturen, daß auch pathologische Keime, Viren, Wurmeier etc. abgetötet werden können, wobei mit zunehmender Erhitzungstemperatur die Dauer der Erhitzungsphase abnehmen kann. Die Erhitzung kann bezüglich der Temperatur auch so gewählt werden, daß eine Pulverisierung des Klärschlamms erreicht wird. Das erhaltene Gut kann dann gegebenenfalls klassiert werden, um in einzelnen Fraktionen erhaltene Schadstoffe und/oder das zugemischte körnige Material zumindest teilweise wieder abzusieben.

Die zu verarbeitenden, teilentwässerten Klärschlämme besitzen einen Trockengehalt von wenigstens 15 % TS, insbesondere 20 bis 50 % TS, um gegebenenfalls ein Ablöschen des heißen Versatzes in einem nassen Klärschlamm zu erreichen. Wird eine Pulverisierung und damit eine weitgehende Trocknung des Klärschlamms durch den Zusatz eines heißen Versatzes gewünscht, sind Trockengehalte von über 50% wählbar.

Weitere Ausgestaltungen der Erfindung sind der nachfolgenden Beschreibung und den Unteransprüchen zu entnehmen.

Die Erfindung wird nachstehend näher erläutert.

Ein Verfahren zum Verarbeiten von Klärschlamm umfaßt die Schritte des Mischens eines teilentwässerten Klärschlamms mit einem bestimmten Versatz, der den Klärschlamm auf mindestens 70°C erhitzt, und Verwenden des durch Mischen gebildeten Guts als Austrag für Dünge- und Rekultivierungszwecke.

Der Versatz besteht aus einem mindestens 250°C heißen, körnigen Material, das in bezug auf Dünge- und Rekultivierungszwecke im wesentlichen neutral oder fördernd ist, d.h. das Wachstum von Pflanzen, Saatgut und dergleichen wird nicht negativ beeinflußt. Vorzugsweise ist das körnige Material 400°C bis 650°C heiß, wenn es dem Klärschlamm zugesetzt wird. Enthaltene Schadstoffe, wie z.B. Schwermetalle, können gegebenenfalls durch zusätzliche adsorptionsfähige Zusätze zum Klärschlamm gefangen oder durch eingangs- oder ausgangsseitig des erfindungsgemäßen Verfahrens durchgeführte Eliminierungsverfahren abgetrennt werden. Eine Anreicherung von Schwermetallen in Böden durch den Austrag des erfindungsgemäßen Mischguts wird dadurch vermieden.

Bevorzugt als heißes, körniges Material ist ein tonmineralhaltiger Rohstoff, bei dem die Tonmineralien durch Brennen zumindest teilweise ihr Kristallwasser verloren haben. Solcher, zumindest graduell calcinierter Ton, der insbesondere aus einem bei etwa 500°C - 700°C durchgeführten Schrühbrand stammt, wird in seinem durch Brennen heißen Zustand dem Klärschlamm zugemischt. Gegebenenfalls kann das Brenngut, d.h. das Schrühkorn, eine Kühlstrecke oder eine Nachheizstrecke durchlaufen. Vorteile des calcinierten Tons liegen in der geringen Quellfähigkeit, kombiniert mit für Adsorptionszwecke vorhandener Oberfläche, wobei die durch den Brennvorgang aufgenommene Wärme zur Übertragung auf den Klärschlamm genutzt wird.

Das körnige, tonmineralhaltige Material kann ein Natursteingranulat oder ein sonstiges Füllstoffmaterial mit einem Tonmineralbestandteil der genannten Art sein, wobei der Tonmineralbestandteil den Hauptbestandteil bilden kann. Alternativ kann das tonmineralhaltige Material im wesentlichen ganz aus Tonmineralien bestehen.

Der Tonmineralbestandteil kann aus einem oder mehreren Zwei- oder Dreischichttonmineralien bestehen bzw. aus einem Gemisch derselben. Typische Dreischichttonmineralien sind Illite, Smectite, Vermiculite, Bentonite etc., die eine hohe Adsorptionskraft besitzen. Als Zweischichttonminerale werden Kaolinittone bevorzugt, die einen zumindest niedrigen Diagenesegrad aufweisen, damit das Kationenaustauschvermögen aufgrund von Gitterfehlstellen gegenüber diagenetisch nicht verfestigtem Ton erhöht ist.

Eine Erhöhung des Schadstoffrückhaltevermögens, insbesondere durch Aktivierung der Tonmineraloberfläche bei Zweischichttonmineralien, kann weiterhin erreicht werden durch Zumischen eines geringfügigen Anteils (<7%) des Eisenminerals Siderit (FeCo₃) und/oder Fe₂O₃ und/oder Fe₂Cl₂.

Je nach Höhe des Schadstoffgehaltes des Schlamms und Art der verwendeten Tonminerale kann der Tonmineralbestandteil mit einem Anteil von etwa 10 bis 70 Gew.-% zugesetzt werden.

Erfindungsgemäß ist vorgesehen, daß die als Adsorptions- und Trägermittel zugesetzten Tonminerale wieder weitgehend abgetrennt werden.

Als heißes, körniges Material können auch andere mineralische Rohstoffe wie Kalkstein, Sandstein und dergleichen oder eine Zusammenstellung derselben verwendet werden. Solchen mineralischen Rohstoffen, die selbst keinen Tonmineralanteil aufweisen, kann ein Tonmineralanteil für Schwermetalladsorptionszwecke zugemischt werden. Dieser Tonmineralanteil kann aus einem oder mehreren Zweischicht- oder Dreischichttonmineralien bestehen. Bekanntlich besitzen Dreischichttonmineralien eine sehr hohe Kationenadsorptionsfähigkeit, so daß deren Beimischung nur in geringen Mengen ausreicht. Beispielsweise ist bei einem Kalkstein oder Sandsteingranulat ein Anteil von weniger als 10 Gew.-% Bentonit ausreichend. Vor dem Mischen mit Klärschlamm wird dieses körnige Material in einem Ofen auf eine Temperatur von mindestens 250°C erhitzt.

Die Vorteile eines Versatzes in Form eines calcinierten Tons kann auch durch den Einsatz von aus Aschen, insbesondere Braunkohle(flug)aschen, stammender Sekundärrohstoffe erreicht werden. In diesen Aschen finden sich neben Quarzsand insbesondere getemperte Tonminerale, die ebenfalls keine Plastizität mehr besitzen und überwiegend noch freie Adsorptionskapazität aufweisen. Die erfindungsgemäße Verarbeitung der Klärschlämme erlaubt dann die Wiederverwertung eines zweiten Sekundärrohstoffs.

Weiterhin können aus sonstigen Feuerungen stammende Aschen bzw. Flugaschen als heißes, körniges Material dem Klärschlamm zugeführt und somit als Sekundärrohstoff wiederverwertet werden.

Da Braunkohleaschen und sonstige Aschen nur in einer Kornfraktion von >0 und <500 µm auftreten, werden diese im allgemeinen pelletiert, wobei vorzugsweise die Pellets mit Abmessungen <20mm, insbesondere <10 mm, als körniges Material dem Klärschlamm zugesetzt werden können. Die Pellets mit größeren Abmessungen dienen Isolier- oder Bauzwecken. Die aus einer Sinter-Pelletierung stammenden Aschenpellets weisen eine Temperatur von bis zu 1000°C auf und können deshalb in diesem heißen Zustand oder gegebenenfalls teilweise abgekühlt zur Erhitzung des Klärschlamms zugemischt werden.

Als heißes, körniges Material zu erwähnen sind weiterhin metallurgische Schlackenkörper der Eisen- und Stahlherstellung, die die aus dem jeweiligen Industrieprozess mitgeführte Wärme unmittelbar an den Klärschlamm weiterleiten können.

Der Einsatz körnigen Materials, das in einem heißen Zustand aus einem Vorprozeß stammt, ist aus Energiespargründen vorteilhaft, aber nicht zwingend. In anderen Fällen ist das körnige Material vor der Zumischung aufzuheizen.

Das heiße, körnige Material umfaßt Korngrößen kleiner 20mm, wobei die Korngrößenverteilung hauptsächlich zwischen 1 µm und 10 mm liegt.

Die Erhitzung des Klärschlamms erfolgt auf mindestens 70°C, insbesondere 70 - 95°C, um eine ausreichende Hygienisierung sicherzustellen. Die Wärmebehandlung kann dabei auch schockartig erfolgen, um gegebenenfalls eine Pulverisierung des Klärschlamms zu erreichen, was das Absieben bestimmter schwermetallhaltiger Stäube erlaubt. Der bei einer Zuführung einer hohen Wärmemenge, d.h. hohe Temperatur und/oder große Menge an körnigem Material, entstehende Auftrocknungseffekt des Klärschlamms ermöglicht ein zumindest teilweises Absieben des zugemischten körnigen Materials von dem dann gebildeten, siebbaren Gut. Dieses zurückgewonnene körnige Material kann erneut als Versatz zur erfindungsgemäßen Verarbeitung von Klärschlamm genutzt werden. Hierdurch entsteht ein Energieträgerkreislauf, der eine Mengenerhöhung des zu entsorgenden Klärschlamms verhindern hilft. Ein Zusatz an heißem, körnigem, tonmineralhaltigem Rohstoff kann zur Aufnahme von Schadstoffen durch die Tonminerale während des Mischens genutzt werden.

Der zu verarbeitende Klärschlamm ist vorzugsweise ein teilentwässerter Flüssigkeitsklärschlamm mit einem Trockensubstanzgehalt von mindestens 15 %, insbesondere 20 bis 50 %. Trockensubstanzgehalte von mehr als 60 % sind zu bevorzugen, wenn eine Pulverisierung des Klärschlamms durch die Wärmebehandlung erreicht werden soll. Der zu verarbeitende Klärschlamm kann aerob und/oder anaerob stabilisiert sein und ist vorzugsweise ausgefault.

Der Klärschlamm kann volumenmäßig in einem Mischungsverhältnis von bis 4 : 1 mit dem heißen, körnigem Material gemischt werden, wobei auch Mischungsverhältnisse mit einem größeren Anteil an körnigem Material verarbeitbar sind, z. B. bis zu 0,5 : 1. Menge und Temperatur des heißen, körnigen Materials substituieren sich dabei. Die Verarbeitung des Klärschlamms kann in Chargen oder kontinuierlich erfolgen.

Das aus Klärschlamm und heißem, körnigem Material gebildete Gut ist unmittelbar oder nach Durchlaufen einer Kompostierung als streufähiges oder in Formkörper preßbares Dünge- und/oder Rekultivierungsmaterial austragbar.

Ist erfindungsgemäß vorgesehen, daß die als Adsorptions- und Trägermittel zugesetzten Tonminerale wieder weitgehend abgetrennt werden, so wird vorzugsweise ein zumindest teilweise calcinierter Tonmineralbestandteil mit mindestens 60% der Körnung zwischen etwa 1 und 10 mm, vorzugsweise mindestens 3 mm, als heißes, körniges Material zugesetzt. Bei oder nach dem Brennen des tonmineralhaltigen Materials zur Herstellung eines zumindest teilweise calcinierten Tonmineralbestandteils kann eine Klassierung, insbesondere Siebung, vorgenommen werden, so daß zumindest der Tonmineralbestandteil mit einer Einheitskörnung zwischen 3 und 10 mm oder mit Einheitskörnungsbereich (d.h. kleiner Körnungsbereich), insbesondere 4 bis 6 mm zugesetzt werden kann. Sofern eine Klassierung des tonmineralhaltigen Materials, insbesondere des Tonmineralbestandteils, vor dem Zusetzen zum Schlamm erfolgt, können mindestens 90 bis 95% der Körnung des Tonmineralbestandteils zwischen 3 und 10 mm zugesetzt werden.

Das aus Schlamm und zugesetztem erhitzten tonmineralhaltigen Material gemäß vorstehender Beschreibung entstehende Gesamtgut wird gemischt, um während des Mischens die Adsorptionskraft des Schrühtonbestandteils zu nutzen für eine Aufnahme von Schadstoffen durch die Tonminerale.

Danach wird ein Grobkornanteil des Gesamtgutes mit mindestens 1 mm abgetrennt, wodurch mit einer Schadstofffracht belastete Tonminerale von dem Gesamtgut abgetrennt werden können. Die für eine Abtrennung des Grobkornanteils wählbare Mindestkorngröße ist vorzugsweise an die Körnung angepaßt, mit der der Tonmineralbestandteil zugesetzt wird.

Die Abtrennung eines Grobkornanteils kann trocken oder naß, insbesondere durch Sieben, Windsichten, Zentrifugieren und/oder Flotation, erfolgen.

Die nach dem erfindungsgemäßen Verfahren dekontaminierten Klärschlämme können als nährstoffbefrachteter Mutterboden(erde)ersatz direkt oder gegebenenfalls nach einer Kompostierung in den Kreislauf der Natur zurückgeführt werden.

## Patentansprüche

1. Verfahren zum Verarbeiten von Klärschlamm durch Mischen eines teilentwässerten Klärschlamms mit einem Versatz, dadurch gekennzeichnet, daß Klärschlamm mit einem Trockengehalt von etwa 15 bis 50 % TS durch Zumischen von mindestens 250°C heißem, körnigem Material, das in bezug auf Dünge- und Rekultivierungszwecke im wesentlichen neutral oder fördernd ist, auf mindestens 70°C erhitzt und das so gebildete Gut als Dünge- und/oder Rekultivierungsmaterial verwendet wird.

2. Verfahren nach Anspruch 1, dadurch gekennzeichnet, daß als heißes, körniges Material ein tonmineralhaltiger Rohstoff mit einem zumindest teilweise calcinierten Tonmineralbestandteil, bei dem durch Brennen die Tonminerale ohne wesentlichem Sinterungsgrad zumindest teilweise ihr Kristallwasser verloren haben, verwendet wird.

3. Verfahren nach Anspruch 2, dadurch gekennzeichnet, daß der Tonmineralbestandteil mit mindestens 60 % der Körnung zwischen etwa 1 und 10 mm zugesetzt wird, das Gesamtgut gemischt und danach ein Grobkornanteil des Gesamtgutes größer gleich 1 mm abgetrennt wird.

4. Verfahren nach einem der Ansprüche 1 bis 3, dadurch gekennzeichnet, daß je nach Höhe des Schadstoffgehaltes des Klärschlamms und Art der verwendeten Tonmineralien der Tonmineralbestandteil mit einem Anteil von etwa 10 bis 70 Gew.-% zugesetzt wird.

5. Verfahren nach einem der Ansprüche 2 bis 4, dadurch gekennzeichnet, daß der tonmineralhaltige Rohstoff einen Hauptbestandteil an einem oder mehreren Zwei- und/oder Dreischichttonmineralien aufweist.

6. Verfahren nach Anspruch 1, dadurch gekennzeichnet daß als heißes, körniges Material ein mineralischer Rohstoff, insbesondere Sand, verwendet wird.

7. Verfahren nach Anspruch 1, dadurch gekennzeichnet, daß als heißes, körniges Material ein Sekundärrohstoff, insbesondere Flugaschenpellets oder metallurgische Schlackenkörper der Eisen- und Stahlherstellung, verwendet wird.

8. Verfahren nach einem der Ansprüche 1 bis 7, dadurch gekennzeichnet, daß das körnige Material Kornfraktionen kleiner 20 mm, insbesondere kleiner 10 mm, umfaßt.

9. Verfahren nach einem der Ansprüche 1 bis 8, dadurch gekennzeichnet, daß der Klärschlamm schockartig auf mindestens 70°C erhitzt wird.

10. Verfahren nach einem der Ansprüche 1 bis 9, dadurch gekennzeichnet, daß das gebildete Gut zur Abtrennung einer oder mehrerer wählbarer Fraktionen vor der Verwendung als Dünge- oder Rekultivierungsmaterial klassiert wird.

11. Verfahren nach einem der Ansprüche 1 bis 10, dadurch gekennzeichnet, daß der Klärschlamm volumenmäßig in einem Mischungsverhältnis von 0,5 : 1 bis zu 4 : 1 mit dem heißen, körnigen Material gemischt wird.
